(19) Europäisches Patentamt
European Patent Office
Office européen des brevets

(11) **EP 4 742 495 A1**

(12) **EUROPEAN PATENT APPLICATION**
published in accordance with Art. 153(4) EPC

(43) Date of publication:
**13.05.2026 Bulletin 2026/20**

(21) Application number: **23944104.1**

(22) Date of filing: **27.07.2023**

(51) International Patent Classification (IPC):
**H02J 9/06** (2006.01)    **H02J 3/28** (2026.01)
**H02S 10/20** (2014.01)

(52) Cooperative Patent Classification (CPC):
**Y02E 10/56**

(86) International application number:
**PCT/CN2023/109452**

(87) International publication number:
**WO 2025/007377 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2023 CN 202310827240**

(71) Applicant: **Shanghai Sigeyuan Intelligent Technology Co., Ltd**
**Shanghai 200120 (CN)**

(72) Inventors:
• **QIN, Yijin**
  **Shanghai 200120 (CN)**
• **ZHANG, Zhen**
  **Shanghai 200120 (CN)**
• **ZHOU, Tao**
  **Shanghai 200120 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **CONNECTION CONTROL METHOD AND APPARATUS FOR STANDBY POWER GENERATION DEVICE FOR PHOTOVOLTAIC ENERGY STORAGE SYSTEM**

(57)     Provided is a connection control method for a standby power generation device for a photovoltaic (PV) energy storage system, including: acquiring an output feature of a PV energy storage inverter in a PV energy storage system, and denoting the output feature as a first feature; acquiring an output feature of a standby power generation device, and denoting the output feature as a second feature; adjusting the PV energy storage inverter to make a difference degree between the first feature and the second feature reach a preset threshold; and when the difference degree between the first feature and the second feature reaches the preset threshold, connecting the standby power generation device to the PV energy storage system, and outputting electric energy by using the PV energy storage inverter and/or the standby power generation device. The present disclosure provides a connection control method and apparatus for a standby power generation device for a PV energy storage system, which can not only avoid a power failure of a load in a process of switching to the standby power generation device, but also prevent load damage caused by an excessively large difference between an output feature of the PV energy storage system and the output feature of the standby power generation device during the switching.

FIG. 1

## Description

## TECHNICAL FIELD

The present disclosure relates to the field of photovoltaic (PV) energy storage systems, and specifically, to a connection control method and apparatus for a standby power generation device for a PV energy storage system.

## BACKGROUND TECHNOLOGY

A PV energy storage system, also referred to as a solar PV energy storage power generation system, is a power generation system composed of a PV device and an energy storage device. To prevent power outages caused by exhaustion of energy stored in a battery when the PV energy storage system operates in an off-grid mode, a standby power generation device can be connected as a standby power source. At present, the standby power generation device is mainly a gasoline or diesel generator. However, since a frequency, a phase, an amplitude, a phase sequence, and other features of an output voltage of the standby power generation device may differ significantly from those of an output voltage of a PV energy storage inverter, if the standby power generation device is directly connected to a load, the load may be damaged.

## CONTENT OF THE INVENTION

To address the deficiencies in the prior art, the present disclosure provides a connection control method and apparatus for a standby power generation device for a PV energy storage system, which can not only avoid a power failure of a load in a process of switching to the standby power generation device, but also prevent load damage caused by an excessively large difference between an output feature of the PV energy storage system and an output feature of the standby power generation device during the switching.

To achieve the above objective, the present disclosure adopts the following specific solutions:

A connection control method for a standby power generation device for a PV energy storage system includes following steps:

acquiring an output feature of a PV energy storage inverter in a PV energy storage system, and denoting the output feature as a first feature;
acquiring an output feature of a standby power generation device, and denoting the output feature as a second feature;
adjusting the PV energy storage inverter to make a difference degree between the first feature and the second feature reach a preset threshold; and
when the difference degree between the first feature and the second feature reaches the preset threshold, connecting the standby power generation device to the PV energy storage system, and outputting electric energy by using the PV energy storage inverter and/or the standby power generation device.

Preferably, both the first feature and the second feature include a plurality of feature parameters, and the PV energy storage inverter is adjusted to make a difference degree between at least one of the feature parameters in the first feature and a corresponding feature parameter in the second feature reach the preset threshold.

Preferably, when difference degrees between all the feature parameters in the first feature and corresponding feature parameters in the second feature reach the preset threshold, the standby power generation device is connected to the PV energy storage system.

Preferably, the feature parameters include a frequency, a phase, and an amplitude of an output voltage.

Preferably, the connection control method further includes following steps:

after connecting the standby power generation device to the PV energy storage system, acquiring a load power of the PV energy storage system; and when determining that the load power of the PV energy storage system is greater than an output power of the standby power generation device, increasing the output power of the standby power generation device based on the load power of the PV energy storage system, and reducing an output power of the PV energy storage inverter.

Preferably, a method for adjusting the output power of the standby power generation device is as follows:

$$P_{gen} = P_{target} * (1 - e^{-\alpha t}); \text{ and}$$

a method for adjusting the output power of the PV energy storage inverter is as follows:

$$P_{inv} = P_{load} - P_{target} * (1 - e^{-\alpha t});$$

where $P_{load}$ represents the load power, $P_{target}$ represents a target output power of the standby power generation device, $\alpha$ represents a characteristic parameter of an adjustment curve, t represents time, and $P_{load} = P_{inv} + P_{gen}$.

Preferably, when the output power of the standby power generation device reaches the load power, the PV energy storage inverter is controlled to stop outputting.

Preferably, after the standby power generation device is connected to the PV energy storage system, a harmonic current of the standby power generation device is acquired; and

based on the harmonic current of the standby power generation device, the PV energy storage system is adjusted to output a harmonic current, such that the harmonic current output by the standby power generation device is zero or tends to zero.

Preferably, the first feature and the second feature are acquired based on a preset acquisition cycle, and acquired data is optimized.

Preferably, a method for optimizing the acquired data includes outlier cleaning.

A connection control apparatus for a standby power generation device for a PV energy storage system is based on the above connection control method for a standby power generation device for a PV energy storage system, and includes:

an acquisition unit configured to acquire a first feature and a second feature;
a control unit configured to generate a control parameter based on the first feature and the second feature, and send the control parameter to an execution unit; and
the execution unit configured to control, based on the control parameter, a standby power generation device to connect to a PV energy storage system.

Preferably, the acquisition unit is further configured to acquire an execution state of the execution unit, and the control unit generates the control parameter based on the first feature, the second feature, and the execution state.

Preferably, the acquisition unit includes a first phase-locked calculation unit and a second phase-locked calculation unit;

the first phase-locked calculation unit is configured to acquire the first feature;
the second phase-locked calculation unit is configured to acquire the second feature; and
the control unit includes a synchronization control calculation unit, and the synchronization control calculation unit is configured to calculate a difference degree between the first feature and the second feature.

Preferably, the acquisition unit is further configured to acquire a harmonic current output by the standby power generation device, and the control unit includes a harmonic current controller.

The present disclosure can not only avoid a power failure of a load in a process of switching to the standby power generation device, but also prevent load damage caused by an excessively large difference between an output feature of the PV energy storage system and the output feature of the standby power generation device during the switching.

## DESCRIPTION OF THE DRAWINGS

To describe the technical solutions in the embodiments of the present disclosure or in the prior art more clearly, the following briefly describes the accompanying drawings required for describing the embodiments or the prior art. Apparently, the accompanying drawings in the following description show merely some embodiments of the present disclosure, and a person of ordinary skill in the art may still derive other accompanying drawings from these accompanying drawings without creative efforts.

FIG. 1 is a flowchart of a connection control method;
FIG. 2 is a structural block diagram of a connection control apparatus;
FIG. 3 shows a topology of a connection control apparatus according to an embodiment;
FIG. 4 shows a result of obtaining a first feature and a second feature according to an embodiment;
FIG. 5 schematically compares an adjusted first feature and a second feature according to an embodiment;
FIG. 6 is a schematic diagram of a power control method after a fuel generator is connected to a PV energy storage system according to an embodiment;
FIG. 7 is a structural diagram of a control unit according to an embodiment; and
FIG. 8 is a schematic diagram of a processing procedure for a harmonic current according to an embodiment.

## SPECIFIC IMPLEMENTATIONS

The technical solutions of the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

A connection control method for a standby power generation device for a PV energy storage system includes the following steps:

An output feature of a PV energy storage inverter in a PV energy storage system is acquired and denoted as a first feature.

An output feature of a standby power generation device is acquired and denoted as a second feature.

The PV energy storage inverter is adjusted to make a difference degree between the first feature and the second feature reach a preset threshold.

When the difference degree between the first feature and the second feature reaches the preset threshold, the standby power generation device is connected to the PV energy storage system, and electric energy is output by using the PV energy storage inverter and/or the standby power generation device.

The present disclosure first obtains respective output features of the PV energy storage inverter and the standby power generation device to determine whether their output features are similar. If there is a significant difference between their output features, the PV energy storage inverter is adjusted to make the first feature approach the second feature. When the difference degree between the first feature and the second feature reaches the preset threshold, the standby power generation device can be connected to the PV energy storage system to supply power to a load. In this way, the load can stably establish a connection to the standby power generation device and receive power supply therefrom, while the PV energy storage system itself can stop supplying power to the load. This can not only avoid a power failure of the load in a process of switching to the standby power generation device, but also prevent load damage caused by an excessively large difference between an output feature of the PV energy storage system and the output feature of the standby power generation device during the switching.

It should be noted that the preset threshold needs to be determined based on actual conditions and characteristics of the PV energy storage system, the standby power generation device, and the load. In addition, since the preset threshold is mainly used to evaluate the difference degree between the first feature and the second feature, the preset threshold can be set with an upper limit, that is, when the difference degree between the first feature and the second feature is less than the preset threshold, the standby power generation device is connected to the PV energy storage system, and the electric energy is output by using the PV energy storage inverter and/or the standby power generation device.

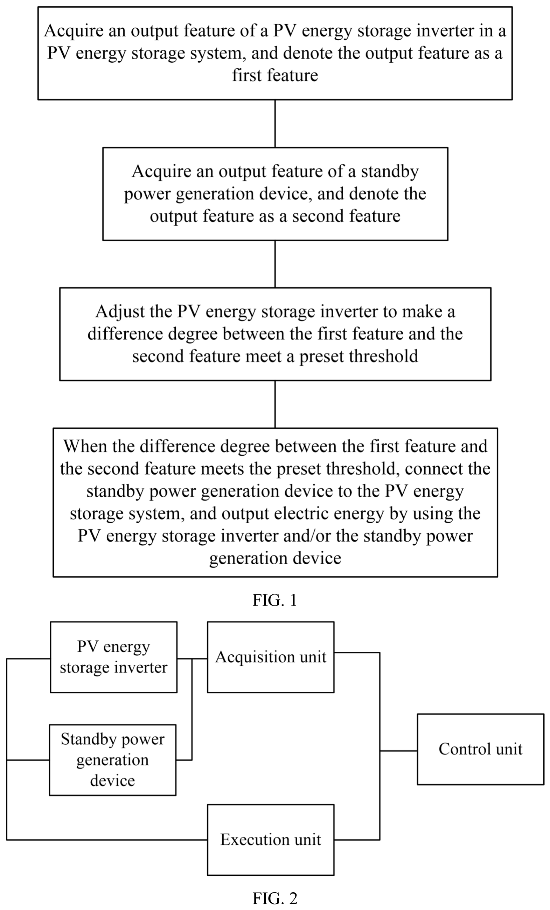

As shown in FIG. 1, both the first feature and the second feature are used to characterize the output feature. In practical applications, the output feature includes a plurality of different parameters. Therefore, both the first feature and the second feature include a plurality of feature parameters. The PV energy storage inverter is adjusted to make a difference degree between at least one feature parameter in the first feature and a corresponding feature parameter in the second feature reach the preset threshold. When the difference degree between the at least one feature parameter in the first feature and a corresponding feature parameter in the second feature reaches the preset threshold, the standby power generation device is controlled to connect to the PV energy storage system.

Furthermore, when difference degrees between more feature parameters reach the preset threshold, the output feature of the PV energy storage inverter is closer to that of the standby power generation device, and switching from power supply by the PV energy storage inverter to that by the standby power generation device is smoother, which can better ensure safety of the load. On this basis, to fully guarantee the safety of the load, when difference degrees between all the feature parameters in the first feature and corresponding feature parameters in the second feature reach the preset threshold, the standby power generation device is controlled to connect to the PV energy storage system and supply power to the load.

In some embodiments, the feature parameters include a frequency, a phase, and an amplitude of an output voltage. In other implementations of the present disclosure, appropriate feature parameters can also be selected based on actual load characteristics.

In some embodiments, a frequency, a phase, and an amplitude of an output voltage of the PV energy storage inverter are respectively represented by $f_{inv}$, $\varphi_{inv}$, and $U_{inv}$, while a frequency, a phase, and an amplitude of an output voltage of the standby power generation device are respectively represented by $f_{gen}$, $\varphi_{gen}$, and $U_{gen}$. Corresponding difference degrees are respectively represented by $\Delta f$, $\Delta\varphi$, and $\Delta U$, that is:

$$\Delta f = f_{inv} - f_{gen};$$

$$\Delta\varphi = \varphi_{inv} - \varphi_{gen};$$

$$\Delta U = U_{inv} - U_{gen};$$

The standby power generation device can be connected to the PV energy storage system when at least one of the following conditions is met:

$$|\Delta f| \leq f_{thd};$$

$$|\Delta\varphi| \leq \varphi_{thd};$$

$$|\Delta U| \leq U_{thd};$$

where $f_{thd}$, $\varphi_{thd}$, and $U_{thd}$ respectively represent frequency, phase, and amplitude deviation thresholds for output voltages of a power generation device and an inverter, which need to be met for connection of the power generation device.

To further ensure the safety of the load, after the standby power generation device is connected to the PV energy storage system, the PV energy storage inverter and the standby power generation device can be adjusted simultaneously. In this way, under a premise of meeting an electric energy supply demand of the load, the standby power generation device can be used as a power supply device in a more gradual manner, while the power supply of the PV energy storage inverter is stopped. A specific adjustment method is as follows:

After the standby power generation device is connected to the PV energy storage system, an output power of the standby power generation device is gradually increased based on a load power of the PV energy storage system, and an output power of the PV energy storage inverter is gradually reduced. More specifically, after the standby power generation device is connected to the PV energy storage system, the PV energy storage inverter and the standby power generation device first supply power to the load simultaneously. At this time, the output power of the standby power generation device is very small and even close to zero, while the PV energy storage inverter still maintains its normal output power to ensure normal operation of the load. Subsequently, the output power of the standby power generation device is gradually increased and the output power of the PV energy storage inverter is gradually reduced. In an adjustment process, a sum of the output power of the PV energy storage inverter and the output power of the standby power generation device is maintained to be equal to or approximately equal to the load power, thereby ensuring stable operation of the load. When the output power of the standby power generation device is equal to or approximately equal to the load power, that is, when the output power of the standby power generation device reaches the load power, the PV energy storage inverter is disconnected from the load, and only the standby power generation device supplies power to the load. After the standby power generation device is connected to the PV energy storage system, the output power of the PV energy storage inverter and the output power of the standby power generation device are controlled, such that the feature parameters and the output power can be matched with the load, thus fully ensuring stable and safe operation of the load.

In some embodiments, a method for adjusting the output power of the standby power generation device is as follows:

$$P_{gen} = P_{target} * (1 - e^{-\alpha t});$$

and a method for adjusting the output power of the PV energy storage inverter is as follows:

$$P_{inv} = P_{load} - P_{target} * (1 - e^{-\alpha t});$$

where, $P_{load}$ represents the load power, $P_{target}$ represents a target output power of the standby power generation device, $\alpha$ represents a characteristic parameter for an adjustment curve, where the adjustment curve can be determined jointly based on a load type, characteristics of the PV energy storage inverter, and characteristics of the standby power generation device, t represents time, and $P_{load} = P_{inv} + P_{gen}$. In practical applications, in addition to a fundamental wave on a load side, a harmonic component is also present after the standby power generation device is connected to the PV energy storage system. To prevent the standby power generation device from generating noise and vibration due to output of a harmonic current, a harmonic current output by the PV energy storage inverter can also be adjusted, enabling the PV energy storage inverter to output a harmonic current that meets a requirement of the load. In this way, the standby power generation device no longer outputs the harmonic current or outputs almost no harmonic current, that is, the harmonic current output by the standby power generation device is zero or tends to zero, thereby preventing the standby power generation device from generating the noise and the vibration due to the output of the harmonic current, or avoiding an increase in the noise and the vibration. In addition, considering that the original first feature and second feature may differ significantly, the first feature needs to be gradually adjusted, which requires continuous optimization of an adjustment amplitude. Moreover, if the first feature and the second feature are acquired only once at a given time point, some abnormal feature parameters may be acquired due to an environment, a device state, or other factors. Therefore, to enable the first feature and the second feature to more accurately reflect states of the PV energy storage inverter and the standby power generation device, and to ensure that the first feature can approach the second feature accurately and stably, the first feature and the second feature are acquired based on a preset acquisition cycle, and acquired data is optimized. Periodic acquisition of the feature parameters can prevent the first feature and the second feature from being interfered with by some outliers, and can also achieve precise control of the adjustment process of the first feature based on feature parameters within one cycle. On this basis, in order to completely avoid the interference of the outliers, a method for optimizing the acquired data includes outlier cleaning. Specifically, the feature parameters are acquired at a plurality of time points within one cycle. An outlier is filtered out by calculating a difference between any given feature parameter and another feature parameter, and then evaluating a magnitude of such a difference. When a difference between a feature parameter and another feature parameter exceeds a preset value, the feature parameter may be identified as an outlier and eliminated accordingly.

As shown in FIG. 2, a connection control apparatus for a standby power generation device for a PV energy storage system is based on the above connection control method for a standby power generation device for a PV energy storage system, and includes an acquisition unit, a control unit, and an execution unit.

The acquisition unit is configured to acquire a first feature and a second feature. The acquisition unit may include a sampling circuit, and the sampling circuit includes conventional circuits such as a filtering circuit, a voltage stabilizing circuit, and an analog/digital (A/D) conversion circuit. Details are not described herein.

The control unit is configured to generate a control parameter based on the first feature and the second feature, and send the control parameter to the execution unit. The control unit may use a single-chip microcontroller as a core, for example, may use an STM32 series single-chip microcontroller, which is also an existing technology in this field. Details are not described herein. The acquisition unit and the control unit can be combined and referred to as a sampling and control unit.

The execution unit is configured to connect a standby power generation device to a PV energy storage system based on the control parameter. The execution unit includes a plurality of contactors for controlling connection and disconnection between a PV energy storage inverter and/or the standby power generation device and a load.

The control unit needs to control the execution unit based on a sampling result of the acquisition unit, and also needs to be able to acquire a current state of the execution unit. Therefore, the acquisition unit is further configured to acquire an execution state of the execution unit. The control unit generates the control parameter based on the first feature, the second feature, and the execution state. The control parameter is used to characterize a state of the execution unit, and specifically, is used to characterize closed and open states of the contactors.

The acquisition unit includes a first phase-locked calculation unit and a second phase-locked calculation unit. The first phase-locked calculation unit is configured to acquire the first feature, and the second phase-locked calculation unit is configured to acquire the second feature. The control unit includes a synchronization control calculation unit, and the synchronization control calculation unit is configured to calculate a difference degree between the first feature and the second feature. The first phase-locked calculation unit and the second phase-locked calculation unit respectively perform phase-locking calculation on an acquired output voltage of the standby power generation device and an acquired output voltage of the PV energy storage inverter to obtain feature parameters. Then, the synchronization control calculation unit performs synchronous control calculation on the feature parameters to obtain a voltage that the PV energy storage inverter needs to output. Subsequently, the control unit controls the PV energy storage inverter.

A harmonic current is controlled to prevent the standby power generation device from generating noise and vibration due to output of the harmonic current. The acquisition unit is further configured to acquire the harmonic current output by the standby power generation device, and the control unit includes a harmonic current controller. Specifically, the acquisition unit first performs fast Fourier transform (FFT) on an acquired current of the standby power generation device, so as to extract the harmonic current of the standby power generation device. The control unit calculates, through the harmonic current controller, a harmonic current instruction for controlling the PV energy storage inverter, and the PV energy storage inverter executes the harmonic current instruction, such that the PV energy storage inverter outputs a harmonic current of the load and the standby power generation device does not output the harmonic current or outputs almost no harmonic current, that is, the harmonic current output by the standby power generation device is zero or tends to zero. This prevents the standby power generation device from generating the noise and the vibration due to the output of the harmonic current, or avoids an increase in the noise and the vibration.

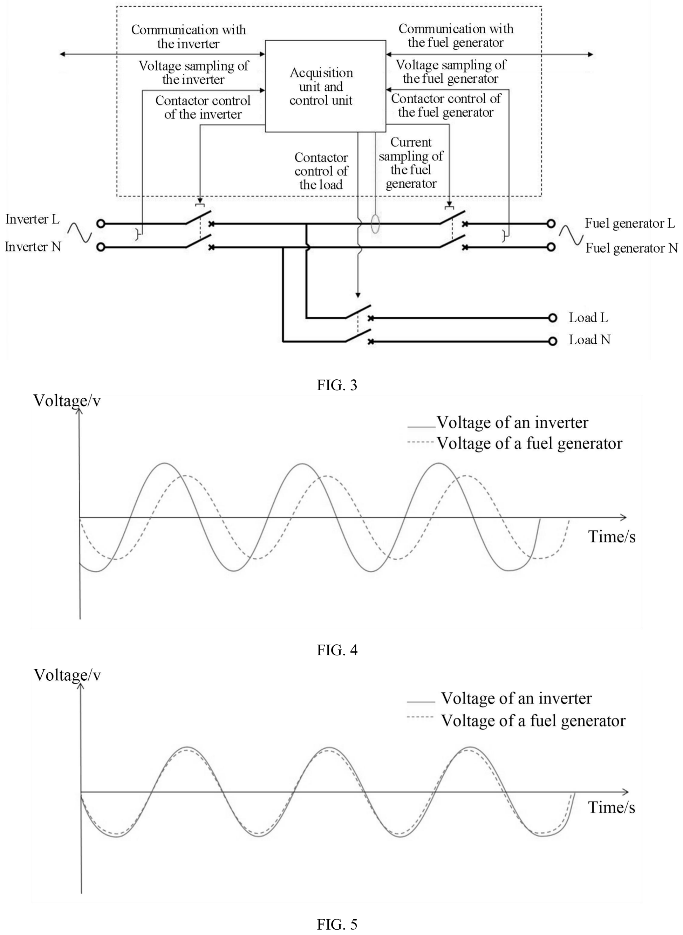

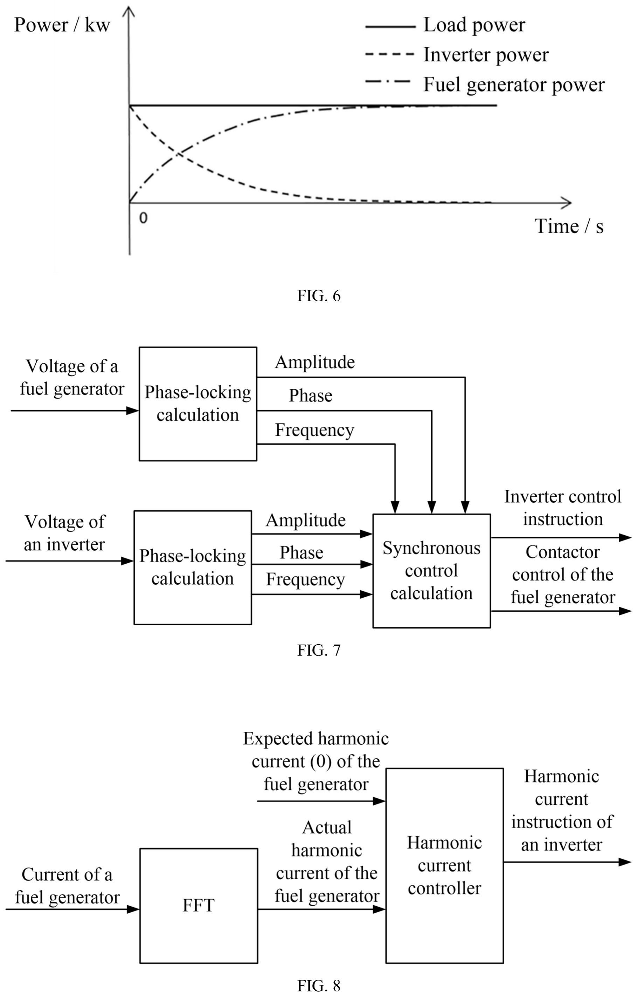

In some embodiments of the present disclosure, the standby power generation device is a fuel generator. Then, a structure of the connection control apparatus can be as shown in FIG. 3. Consequently, the acquired first feature and second feature can be represented by a curve diagram shown in FIG. 4. It can be seen that in an initial state, there will be a significant difference between the first feature and the second feature. Therefore, the first feature needs to be adjusted before the fuel generator is connected to the PV energy storage system. After the first feature is adjusted, comparison between the first feature and the second feature is shown in FIG. 5. It can be seen that the difference degree between the first feature and the second feature has significantly decreased. When the difference degree reaches a preset threshold, the fuel generator can be connected to the PV energy storage system. After the fuel generator is connected to the PV energy storage system, reference can be made to FIG. 6 for an adjustment process of an output power of the fuel generator, that is, an output power of the PV energy storage inverter is gradually reduced, and the output power of the fuel generator is gradually increased. Finally, a structure of the acquisition unit can be as shown in FIG. 7, and a processing procedure for the harmonic current can be as shown in FIG. 8.

Each embodiment in this specification is described in a progressive mode, each embodiment focuses on differences from other embodiments, and references can be made to each other for the same and similar parts between embodiments.

The above description of the disclosed embodiments enables those skilled in the art to achieve or use the present disclosure. Various modifications to these embodiments are readily apparent to those skilled in the art, and the generic principles defined herein may be practiced in other embodiments without departing from the spirit or scope of the present disclosure. Thus, the present disclosure is not limited to the embodiments shown herein but falls within the widest scope consistent with the principles and novel features disclosed herein.

**Claims**

**1.** A connection control method for a standby power generation device for a photovoltaic (PV) energy storage system, comprising following steps:

acquiring an output feature of a PV energy storage inverter in a PV energy storage system, and denoting the output feature as a first feature;
acquiring an output feature of a standby power generation device, and denoting the output feature as a second feature;
adjusting the PV energy storage inverter to make a difference degree between the first feature and the second feature reach a preset threshold; and
when the difference degree between the first feature and the second feature reaches the preset threshold, connecting the standby power generation device to the PV energy storage system, and outputting electric energy by using the PV energy storage inverter and/or the standby power generation device.

2. The connection control method for a standby power generation device for a PV energy storage system according to claim 1, wherein both the first feature and the second feature comprise a plurality of feature parameters, and the PV energy storage inverter is adjusted to make a difference degree between at least one of the feature parameters in the first feature and a corresponding feature parameter in the second feature reach the preset threshold.

3. The connection control method for a standby power generation device for a PV energy storage system according to claim 2, wherein when difference degrees between all the feature parameters in the first feature and corresponding feature parameters in the second feature reach the preset threshold, the standby power generation device is connected to the PV energy storage system.

4. The connection control method for a standby power generation device for a PV energy storage system according to claim 2, wherein the feature parameters comprise a frequency, a phase, and an amplitude of an output voltage.

5. The connection control method for a standby power generation device for a PV energy storage system according to claim 1, further comprising following steps:

after connecting the standby power generation device to the PV energy storage system, acquiring a load power of the PV energy storage system; and
when determining that the load power of the PV energy storage system is greater than an output power of the standby power generation device, increasing the output power of the standby power generation device based on the load power of the PV energy storage system, and reducing an output power of the PV energy storage inverter.

6. The connection control method for a standby power generation device for a PV energy storage system according to claim 5, wherein a method for adjusting the output power of the standby power generation device is as follows:

$$P_{gen} = P_{target} * (1 - e^{-\alpha t});$$

and a method for adjusting the output power of the PV energy storage inverter is as follows:

$$P_{inv} = P_{load} - P_{target} * (1 - e^{-\alpha t});$$

wherein $P_{load}$ represents the load power, $P_{target}$ represents a target output power of the standby power generation device, $\alpha$ represents a characteristic parameter for an adjustment curve, t represents time, and $P_{load} = P_{inv} + P_{gen}$.

7. The connection control method for a standby power generation device for a PV energy storage system according to claim 5, wherein when the output power of the standby power generation device reaches the load power, the PV energy storage inverter is controlled to stop outputting.

8. The connection control method for a standby power generation device for a PV energy storage system according to claim 1, further comprising following steps:

after connecting the standby power generation device to the PV energy storage system, acquiring a harmonic current of the standby power generation device; and
adjusting, based on the harmonic current of the standby power generation device, the PV energy storage system to output a harmonic current, such that the harmonic current output by the standby power generation device is zero or tends to zero.

9. The connection control method for a standby power generation device for a PV energy storage system according to claim 1, wherein the first feature and the second feature are acquired based on a preset acquisition cycle, and acquired data is optimized.

10. The connection control method for a standby power generation device for a PV energy storage system according to claim 9, wherein a method for optimizing the acquired data comprises outlier cleaning.

11. A connection control apparatus for a standby power generation device for a PV energy storage system, based on the connection control method for a standby power generation device for a PV energy storage system according to any one of claims 1 to 10, wherein the connection control apparatus comprises:

> an acquisition unit configured to acquire a first feature and a second feature;
> a control unit configured to generate a control parameter based on the first feature and the second feature, and send the control parameter to an execution unit; and
> the execution unit configured to control, based on the control parameter, a standby power generation device to connect to a PV energy storage system.

12. The connection control apparatus for a standby power generation device for a PV energy storage system according to claim 11, wherein the acquisition unit is further configured to acquire an execution state of the execution unit, and the control unit generates the control parameter based on the first feature, the second feature, and the execution state.

13. The connection control apparatus for a standby power generation device for a PV energy storage system according to claim 12, wherein the acquisition unit comprises a first phase-locked calculation unit and a second phase-locked calculation unit;

> the first phase-locked calculation unit is configured to acquire the first feature;
> the second phase-locked calculation unit is configured to acquire the second feature; and
> the control unit comprises a synchronization control calculation unit, and the synchronization control calculation unit is configured to calculate a difference degree between the first feature and the second feature.

14. The connection control apparatus for a standby power generation device for a PV energy storage system according to claim 11, wherein the acquisition unit is further configured to acquire a harmonic current output by the standby power generation device, and the control unit comprises a harmonic current controller.

Acquire an output feature of a PV energy storage inverter in a PV energy storage system, and denote the output feature as a first feature

Acquire an output feature of a standby power generation device, and denote the output feature as a second feature

Adjust the PV energy storage inverter to make a difference degree between the first feature and the second feature meet a preset threshold

When the difference degree between the first feature and the second feature meets the preset threshold, connect the standby power generation device to the PV energy storage system, and output electric energy by using the PV energy storage inverter and/or the standby power generation device

FIG. 1

PV energy storage inverter

Acquisition unit

Standby power generation device

Control unit

Execution unit

FIG. 2

FIG. 3

FIG. 4

FIG. 5

FIG. 6

FIG. 7

FIG. 8

## INTERNATIONAL SEARCH REPORT

| | |
|---|---|
| International application No. | |
| | **PCT/CN2023/109452** |

**A.    CLASSIFICATION OF SUBJECT MATTER**

H02J 9/06(2006.01)i;  H02J 3/28(2006.01)i;  H02S 10/20(2014.01)i

According to International Patent Classification (IPC) or to both national classification and IPC

**B.    FIELDS SEARCHED**

Minimum documentation searched (classification system followed by classification symbols)

IPC: H02J H02S

Documentation searched other than minimum documentation to the extent that such documents are included in the fields searched

Electronic data base consulted during the international search (name of data base and, where practicable, search terms used)

CNTXT ENTXT ENTXTC DWPI WPABS CNKI IEEE: 光储, 备用, 后备, 电源, 发电, 逆变器, 输出, 调整, 控制, optical storage, backup, standby, power source, generation, inverter, output, regulation, control

**C.    DOCUMENTS CONSIDERED TO BE RELEVANT**

| Category* | Citation of document, with indication, where appropriate, of the relevant passages | Relevant to claim No. |
|---|---|---|
| Y | CN 113013983 A (JIANGSU ALLENERGY TECHNOLOGY CO., LTD.) 22 June 2021 (2021-06-22) description, paragraphs 3-19, and figures 1-3 | 1-14 |
| Y | CN 109067308 A (GUANGZHOU POWER SUPPLY BUREAU CO., LTD.) 21 December 2018 (2018-12-21) description, paragraphs 23-67, and figures 1-5 | 1-14 |
| A | CN 106026358 A (BOE TECHNOLOGY GROUP CO., LTD. et al.) 12 October 2016 (2016-10-12) entire document | 1-14 |
| A | WO 2021258402 A1 (NIU SHENGYANG) 30 December 2021 (2021-12-30) entire document | 1-14 |

☐ Further documents are listed in the continuation of Box C.    ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **06 March 2024** | **08 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/109452**

| Patent document cited in search report | | | Publication date (day/month/year) | Patent family member(s) | Publication date (day/month/year) |
|---|---|---|---|---|---|
| CN | 113013983 | A | 22 June 2021 | None | |
| CN | 109067308 | A | 21 December 2018 | None | |
| CN | 106026358 | A | 12 October 2016 | None | |
| WO | 2021258402 | A1 | 30 December 2021 | None | |

Form PCT/ISA/210 (patent family annex) (July 2022)